# EUROPÄISCHE PATENTSCHRIFT

(11) **EP 1 108 984 B1**
(45) Veröffentlichungstag und Bekanntmachung des Hinweises auf die Patenterteilung: **14.08.2019**
(21) Anmeldenummer: 00102813.3
(22) Anmeldetag: 11.02.2000
(51) Int. Cl.: G01D 3/02, G01D 9/00

(54) **Programmierbares Feldgerät**
Programmable mobile apparatus
Appareil mobile programmable

(30) Priorität: 18.10.1999 EP 99120713
(43) Veröffentlichungstag der Anmeldung: 20.06.2001
(73) Patentinhaber: Endress + Hauser Flowtec AG, 4153 Reinach BL 1 (CH)
(72) Erfinder: Banzhaf, Monika, 70439 Stuttgart (DE); Stinus, Jochen, 79594 Inzlingen (DE)
(74) Vertreter: Andres, Angelika Maria

(56) Entgegenhaltungen:
- EP-A- 0 887 729
- EP-A1- 1 240 560
- WO-A2-98/53619
- WO-A2-99/22489
- US-A- 5 372 141

## Beschreibung

Die Erfindung betrifft ein programmierbares Feldgerät mit einer Feldgeräte-Elektronik und ein Verfahren zu deren Rekonfiguration.

In der Prozeß-Automatisierungstechnik werden zur Erzeugung von analogen oder digitalen, Prozeß-Meßgrößen repräsentierenden Meßsignalen bevorzugt Feldgeräte eingesetzt. Bei den Prozeß-Meßgrößen kann es sich z.B. um einen Massendurchfluß, einen Füllstand, einen Druck, eine Temperatur etc., handeln, die mittels entsprechender Meßwert-Aufnehmer erfaßt werden.

Üblicherweise sind derartige Feldgeräte über ein entsprechendes Datenübertragungs-System miteinander und mit entsprechenden Prozeß-Leitrechnern verbunden, an das sie die Meßsignale z.B. via (4 mA bis 20 mA)-Stromschleife und/oder via digitalen Daten-Bus senden. Als Datenübertragungs-Systeme dienen, insb. serielle, Feldbus-Systeme, wie z.B. PROFIBUS-PA, FOUNDATION FIELDBUS, CAN-BUS etc. sowie die entsprechenden Übertragungs-Protokolle.

Mittels der Prozeß-Leitrechner werden die übertragenen Meßsignale weiterverarbeitet und als entsprechende Meßergebnisse z.B. auf Monitoren visualisiert und/oder in Steuersignale für Prozeß-Stellglieder, wie z.B. MagnetVentile, Elektro-Motoren etc., umgewandelt.

Neben der primären Funktion, nämlich der Erzeugung von Meßsignalen, weisen moderne Feldgeräte zahlreiche weitere Funktionalitäten auf, die ein effizientes und sicheres Führen des zu beobachtenden Prozesses unterstützen. Dazu zählen u.a. solche zusätzlichen Funktionen, wie die Eigenüberwachung des Feldgerätes, das Abspeichern von Meßwerten, das Erzeugen von Steuersignalen für Stellglieder, etc. Aufgrund dieser hohen Funktionalität der Feldgeräte können in zunehmendem Maße Prozeß leitende Funktionen in die Feld-Ebene verlagert und somit die Prozeßführungs-Systeme entsprechend dezentral organisiert werden. Ferner betreffen diese zusätzlichen Funktionalitäten z.B. auch die Inbetriebnahme des Feldgerätes sowie dessen Anbindung an das Datenübertragungs-System.

Diese und weitere Funktionen der Feldgeräten sind üblicherweise mittels einer Feldgeräte-Elektronik realisiert, die einen Mikro-Computer und in diesen entsprechend implementierte Software umfaßt. Die Software wird vor oder während der Inbetriebnahme des Feldgerätes in einen permanenten Speicher, z.B. einen PROM oder einen nicht-flüchtigen, persistenten Speicher, z.B. eine EEPROM, des Mikro-Computers einprogrammiert und ggf. für den Betrieb des Feldgerätes in einen flüchtigen Speicher, z.B. einen RAM, geladen.

So ist z.B. in der WO-A 98/44 317, der WO-A 98/20 469, der WO-A 98/14 850, der WO-A 97/94 017, der WO-A 97/07 444, der WO-A 96/41 135, der WO-A 96/05 484, der EP-A 928 974, der EP-A 780 665, der US-A 58 76 122, der US-A 58 29 876, der US-A 58 25 664, der US-A 58 12 428, der US-A 57 64 928, der US-A 57 64 891, der US-A 57 54 596, der US-A 55 73 032, derUS-A 56 39 970, der US-A 54 95 769, der US-A 54 85 400, der US-A 54 81 200, der US-A 52 53 511, der US-A 49 26 340 jeweils ein Feldgerät mit einer Feldgeräte-Elektronik zum Erzeugen wenigstens eines eine Prozeßmeßgröße repräsentierenden Meßsignals beschrieben, bei welchem Feldgerät die Felgeräte-Elektronik eine nicht-flüchtige Datenspeicherschaltung zum persistenten Speichern von im Feldgerät ausführbarer Software umfaßt.

Die mittels der Feldgeräte beobachteten Prozesse unterliegen sowohl hinsichtlich der baulichen Ausführung der Anlagen als auch hinsichtlich der zeitlichen Abfolgen einzelner Prozeßschritte einer steten Modifikation. In entsprechender Weise sind auch die Feldgeräte den sich ändernden Prozeßbedingungen anzupasssen und weiter zu entwickeln. Dies erstreckt sich einerseits auf die Meßwert-Aufnehmer, andererseits aber vor allem auch auf die implementierten Funktionen, wie z.B. die Ansteuerung des Meßwert-Aufnehmers, die Auswertung der Meßsignale oder die Präsentation der Meßergebnisse sowie die Kommunikation mit dem Datenübertragungs-System.

Für derartige Rekonfigurationen der in der Feldgeräte-Elektronik implementierten Funktionen sind in programmierbaren Feldgeräten vorwiegend entsprechende Änderungen der gespeicherten Software erforderlich. Diese Rekonfigurationen werden üblicherweise mittels einer an das Feldgerät angeschlossenen Bedieneinheit vor Ort vorgenommen und können z.B. Änderungen einzelner Meßgeräte-Parameter oder auch das Laden von kompletten Auswerte-Programmen umfassen.

Eine Möglichkeit zur Realisierung der Rekonfigurationen besteht darin, die zu ändernden Software enthaltende Speicher durch die geänderte Software enthaltende Speicher zu ersetzen, was z.B. durch ein Umstecken einzelner Speicher-Elementen oder durch Auswechseln der entsprechenden Speicher-Platinen erfolgen kann. Dies ist mit einem sehr hohen Installations-Aufwand verbunden, da für derartige Rekonfigurationen das Gehäuse des Feldgerätes zu öffnen und letzteres dem entsprechend abzuschalten ist. Ein weitere Nachteil ist, daß bei dieser Rekonfiguration ggf. die betreffenden Anlagenbereiche ebenfalls außer Betrieb zu nehmen sind.

Die WO 99/22489 beschäftigt sich mit dem Programmieren und Umprogrammieren des Speichers eines Feldgerätes. Sofern sich das Feldgerät im Betriebszustand befindet, wird eine Strommenge entweder zur Aufrechterhaltung des Normalbetriebes verwendet oder über ein Bussystem verwaltet, um beim Umprogrammieren verwendet zu werden. Das Feldgerät weist einen Speicher auf der sich in einen oberen Speicher und einen unteren Speicher unterteilt. Der obere Speicher dient zum Annehmen neuer Anwendungsinformationen während der Herunterladevorgänge. Der untere Speicher enthält die normale oder gerade ablaufende Anwendung.

Die US 5,372,141 offenbart ein Analysegerät zur Bestimmung des Gewichts, Körperfetts und dergleichen.

Die EP 0 887 729 A2 offenbart ein Endgerät für ferngesteuertes Laden. Dabei wird die Funktionsweise einer herkömmlichen Endgeräte-Vorrichtung unter Verwendung eines Haupt-EEPROM und eines Upgrade-EEPROM beschrieben.

Bei der Verwendung von nicht-flüchtigen Speicher-Elementen zum Speichern der Software besteht eine weitere Möglichkeit zur Rekonfiguration der Feldgeräte-Elektronik darin, die geänderte Software von einem Massespeicher, z.B. einer Diskette, einer CD-ROM oder einem Magnetband, und/oder via Download-Bus in einen flüchtigen Speicher der Signalverarbeitungs-Einheit, z.B. in einen RAM, herunterzuladen. Daran anschließend kann die entsprechend zu ändernde Software im nicht-flüchtigen Speicher gelöscht und durch die im flüchtigen Speicher befindliche Software ersetzt werden.

Für diese Rekonfigurationen muß das Gehäuse Feldgerätes nicht geöffnet werden; das Feldgerät ist jedoch off-line, d.h. außer Meß-Betrieb, zu schalten. Dadurch verringert sich zwar der Zeitaufwand für die Rekonfiguration erheblich, ein allfälliges Abschalten der betroffenen Anlagenbereiche kann jedoch nicht ausgeschlossen werden.

Ein weiterer Nachteil bei einer derartigen Rekonfiguration besteht darin, das die zu ändernde Software nicht mehr und die geänderte Software noch nicht vollständig geladen sind. Je länger dieser Zustand andauert, desto höher ist die Wahrscheinlichkeit, daß äußere Störungen, z.B. Spannungsschwankungen in der Energieversorgung des Feldgerätes, auftreten. Dies kann aufgrund des relativ hohen Energiebedarfs beim Beschreiben nicht-flüchtiger Speicher und aufgrund der in, insb. eigensicheren, Feldgeräten, üblicherweise geringen Energiereserven dazu führen, daß die zu ladenden Software aus dem flüchtigen Speicher gelöscht werden und somit für die Rekonfiguration nicht mehr verfügbar ist. Dem entsprechend bricht die Rekonfiguration unvollendet ab. Dieser fehlerhaften Zustand kann z.B. durch ein Rücksetzen des Mikro-Computers auf fest einprogrammierte Standard-Einstellungen und ein erneutes Laden der Software überwunden werden, was wiederum zur Verlängerung der Stillstandszeit des Feldgerätes und ggf. des entsprechenden Anlagenbereiches führt.

Einer Verringerung der Fehlerwahrscheinlichkeit durch eine Erhöhung der verfügbaren elektrischen Leistung, z.B. durch zusätzliche, energiespeichernde Akkumulator-und/oder Kapazitäts-Netzwerke, steht jedoch oftmals die Forderung nach Feldgeräte-Elektroniken mit minimalem Raum- und Energiebedarf sowie mit minimalem Schaltungsaufwand entgegen. Ferner ist das Speichervermögen der Energiespeicher-Schaltungen für zahlreiche Anwendungen, insb. in explosionsgefährdeten Bereichen, durch entsprechende Standards auf eine maximale Energiereserve begrenzt.

Eine Aufgabe der Erfindung besteht daher darin, ein programmierbares, insb. eigensicheres, Feldgerät mit einer Feldgeräte-Elektronik anzugeben, die im On-line-Betrieb rekonfigurierbar ist und die während sowie nach dem Rekonfigurieren nicht in einen durch dieses Rekonfigurieren bedingten, undefinierten oder fehlerhaften Zustand versetzt wird. Ferner soll in der Feldgeräte-Elektronik auch nach einem Wegfall der Energieversorgung während des Rekonfigurierens wenigstens die zuletzt ausgeführte Software gespeichert sein.

Zur Lösung der Aufgabe besteht die Erfindung in einem Verfahren gemäß Anspruch 1 und in einem Feldgerät gemäß Anspruch 6 mit einer Feldgeräte-Elektronik. Die Feldgeräte-Elektronik umfasst:
- eine nicht-flüchtige Datenspeicher-Schaltung zum persistenten Speichern von Software
   -- mit einem aktivierten ersten Speicherbereich für einen eine erste Konfiguration der Feldgeräte-Elektronik repräsentierenden ersten Programm-Code und
   --mit einem deaktivierten zweiten Speicherbereich für einen eine zweite Konfiguration der Feldgeräte-Elektronik repräsentierenden zweiten Programm-Code, sowie
- eine Steuer-Schaltung, die ein dem Deaktivieren des ersten Speicherbereichs und dem Aktivieren des zweiten Speicherbereichs dienendes Auswahl-Signal erzeugt.

Das Verfahren umfaßt folgende Schritte:
- ein in einem aktivierten ersten Speicherbereich der Datenspeicher-Schaltung gespeicherter, eine erste Konfiguration der Feldgeräte-Elektronik repräsentierender ersten Programm-Code wird von einem Rechen-Prozess ausgeführt, ein erster Konfigurations-Prozess wird gestartet und in einem Koordinations-Prozess registriert,
- der Koordinations-Prozess gewährt exklusiv dem ersten Konfigurations-Prozess einen Daten schreibenden Zugriff auf einen zweiten Speicherbereich der Datenspeicher-Schaltung,
- der erste Konfigurations-Prozess sendet Änderungs-Daten an den zweiten Speicherbereich, die dem Erstellen eines eine zweite Konfiguration der Feldgeräte-Elektronik repräsentierenden zweiten Programm-Codes dienen, und
- der Koordinations-Prozess deaktiviert den ersten Speicherbereich und aktiviert den zweiten Speicherbereich.

Erfindungsgemäß umfasst das Feldgerät einen an die Feldgeräte-Elektronik angeschlossen, auf die Prozessmessgrösse reagierenden Messwert-Aufnehmer.

Nach einer Weiterbildung des Feldgerätes der Erfindung umfasst die Datenspeicher-Schaltung einen deaktivierten dritten Speicherbereich für einen eine dritte Konfiguration der Feldgeräte-Elektronik repräsentierenden dritten Programm-Code.

Nach einer ersten Weiterbildung des Verfahrens der Erfindung wird ein zweiter Konfigurations-Prozess gestartet und im Koordinations-Prozess registriert, und
gewährt der Koordinations-Prozess exklusiv dem zweiten Konfigurations-Prozess einen Daten schreibenden Zugriff auf einen dritten Speicherbereich der Datenspeicher-Schaltung.

Nach einer zweiten Weiterbildung des Verfahrens der Erfindung gewährt der Koordinations-Prozess exklusiv dem Konfigurations-Prozess einen Daten lesenden Zugriff auf den zweiten Speicherbereich.

Nach einer dritten Weiterbildung des Verfahrens der Erfindung wird vor dem Starten des Konfigurations-Prozesses der erste Programm-Code in zweiten Speicherbereich eingeschrieben .

Ein Vorteil der Erfindung besteht darin, dass der die momentane Konfiguration der Feldgeräte-Elektronik repräsentierende erste Programm-Code während des Rekonfigurierens unverändert geladen und somit die ausgeführte Software stets in einem konsistenten Zustand ist. Da die Feldgeräte-Elektronik während des Rekonfigurierens funktionsfähig ist, kann letzteres somit auch im Betrieb des Feldgerätes durchgeführt werden.

Ein weiterer Vorteil der Erfindung ist, daß das Deaktivieren der ersten Konfiguration und das Aktivieren der zweiten Konfiguration gleichzeitig erfolgt und auch bei einem Ausfall der externen Energieversorgung mit den in derartigen, insb. auch in eigensicheren, Feldgeräten üblicherweise gespeicherten Energiereserve sicher und konsistent beendet werden kann.

Nachfolgend werden die Erfindung sowie weitere Vorteile anhand von in den Figuren der Zeichnung dargestellten Ausführungsbeispielen erläutert. Gleiche Elemente sind in allen Figuren mit denselben Bezugszeichen versehen; falls es der Übersichtlichkeit dienlich ist, wird auf bereits erwähnte Bezugszeichen in nachfolgenden Figuren verzichtet.
- Fig. 1: zeigt schematisch ein Ausführungsbeispiel eines programmierbaren Feldgerät mit einer Feldgeräte-Elektronik,
- Fig. 2: zeigt schematisch im Blockdiagramm ein bevorzugtes Ausführungsbeispiel eines Verfahrens zum Rekonfigurieren einer Feldgeräte-Elektronik gemäß Fig. 1,
- Fig. 3: zeigt schematisch im Flußdiagramm eine zeitliche Abfolge des erfindungsgemäßen Verfahrens zum Rekonfigurieren einer Feldgeräte-Elektronik und
- Fig. 4: zeigt schematisch im Flußdiagramm eine zeitliche Abfolge einer Weiterbildung des erfindungsgemäßen Verfahrens zum Rekonfigurieren einer Feldgeräte-Elektronik.

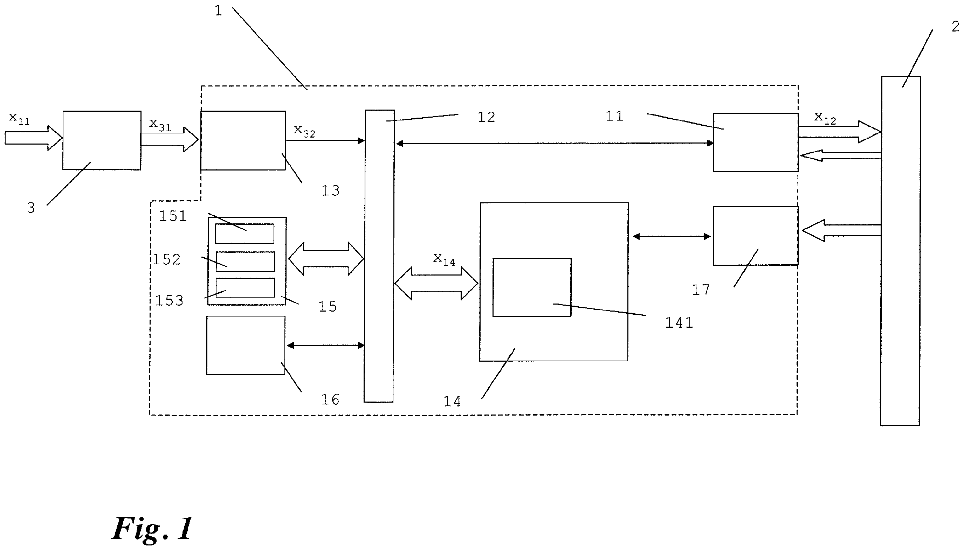

In der Fig. 1 ist nach der Art eines Blockschaltbildes ein Ausführungsbeispiel eines Feldgerätes dargestellt, das dazu dient, wenigstens ein eine Prozeßmeßgröße x₁₁, z.B. einen Füllstand in einem Behälter, einen Volumen- und/oder Massedurchfluß eines strömenden Fluids oder einen Druck, einen pH-Wert und/oder eine Temperatur eines Mediums etc., repräsentierendes, analoges oder digitales Meßsignal x₁₂ zu erzeugen.

Zum Senden von Daten, z.B. des Meßsignals x₁₂, an andere Verfahrens-Prozeß beobachtende und/oder führende Informations-Systeme, z.B. eine Speicher-programmierbaren Steuerung und/oder einen Prozeß-Leitrechner, und/oder zum Empfangen von Daten, z.B. zum Empfangen von Einstellwerten, umfaßt das Feldgerät eine Feldgeräte-Elektronik 1, die mittels einer Kommunikations-Schnittstelle 11 mit einem externen Bus-System 2 gekoppelt ist. Derartige Bus-Systeme, z.B. PROFIBUS-PA, FIELDBUS, CAN-BUS etc., realisieren neben der erwähnten Datenübertragung üblicherweise auch die Energieversorgung der angeschlossenen Feldgeräte.

Als Kommunikations-Schnittstelle 11 können sowohl eine Zweileiter-Schnittstelle, z.B. die Standard-Schnittstelle RS-485 oder eine (4 mA bis 20 mA)-Stromschleife, als auch eine Mehrleiter-Schnittstelle, z.B. die Standard-Schnittstellen RS-422, TTY etc., sowie die entsprechenden Übertragungsprotokolle dienen. Je nach Ausführung der Kommunikations-Schnittstelle 11 ist das Feldgerät entweder direkt oder via REMOTE-I/O-Module an Bus-System 2 anschliessbar. Für letzteren Fall kann zur Daten-Übertragung ein SMART-Protokoll, z.B. HART, INTENSOR etc., angewendet werden, bei dem das analogen Messsignal xl2 zur Übertragung von digitalen Daten frequenz- bzw. ampiltuden-moduliert wird.

Erfindungsgemäß ist an das Feldgerät ferner ein auf die Prozessmessgrösse x11 reagierender Messwert-Aufnehmer 3 angeschlossen. Dieser Messwert-Aufnehmer 3 dient dazu, die Prozessmessgrösse x11 zu erfassen und in ein diese repräsentierendes, insb. analoges, Aufnehmer-Signal x31, z.B. einen Signalstrom, eine Signalspannung oder in ein FrequenzSignal, umzuwandeln. Der Messwert-Aufnehmer 3 ist ein Coriolis-Massedurchfluss-Aufnehmer, ein magnetisch-induktiver Volumendurchfluss-Aufnehmer, ein Druck-Transmitter, eine pH-Elektrodenanordnung, ein Temperatur-Aufnehmer oder ein Füllstands-Aufnehmer.

Das vom Messwert-Aufnehmer 3 erzeugte Aufnehmer-Signal x31 wird gemäss Fig. 1 einer Konverter-Schaltung 13 der Feldgeräte-Elektronik 1 eingangsseits angelegt, welche Konverter-Schaltung 13 dazu dient, das Aufnehmer-Signal x31 in ein digitales Aufnehmer-Signal x32 umzuwandeln. Dazu wird das Aufnehmer-Signal x31 ggf. in der dem Fachmann bekannte Weise anti-aliasinggefiltert, abgetastet, gehalten und mittels entsprechender A/D-Umsetzer digtalisiert. Das digitale Aufnehmer-Signal x32 ist ausgangsseits der Konverter-Schaltung 13 über einen adressierbaren Signal-Port an einen Daten-Bus eines internen Bus-Systems 12 der Feldgeräte-Elektronik 1 angelegt. Selbstverständlich kann neben dem via

Konverter-Schaltung 13 an das interne Bus-System 12 angeschlossenen Meßwert-Aufnehmer 3 oder anstelle desselben auch ein weiteres, insb. Meßdaten sendendes, Feldgerät über eine entsprechende Schnittstelle an das interne Bus-System 12 angeschlossen sein.

Neben der Digitalsierung des Aufnehmer-Signals x₃₁ dient die Feldgeräte-Elektronik 1 ferner dazu, das digitale Aufnehmer-Signal x₃₂ in das Meßsignal x₁₂ umzuwandeln sowie dem Daten-Austausch dienende Übertragungs-Protokolle zu generieren. Ferner liefert die Feldgeräte-Elektronik 1 ggf. auch der Ansteuerung, insb. der elektrischen oder elektro-mechanischen Anregung, des Meßwert-Aufnehmers 3 dienendene Steuer-Signale.

Die Meß-Elektronik 1 ist bevorzugt in einem einzigen Elektronik-Gehäuse des Feldgerätes untergebracht; sie kann z.B. auch bei modular ausgeführten Feldgeräten mit einem Meßwert-Aufnehmer-Modul und mit einem Signal-Auswerte-Modul, auf beide Module verteilt angeordnet sein.

Zur Realisierung der Feldgeräte-Elektronik 1 können z.B. in der dem Fachmann bekannten Weise ASIC- und/oder SMD-Technologien angewendet werden.

Während der Betriebszeit von Feldgeräten der beschriebenen Art werden üblicherweise seitens des Anwenders und/oder seitens des Herstellers ein oder mehrere Änderungen von dem Betreiben des Feldgerätes dienenden, in der Feldgeräte-Elektronik 1 implementierten Signalverarbeitungs-Routinen veranlaßt, die z.B. Rekalibrierungen der Feldgeräte-Elektronik 1, Verbesserungen implementierter Auswerte-Verfahren und/oder Modifikationen von Übertragungs-Protokollen umfassen können.

In modernen Feldgeräten sind daher solche Signalverarbeitungs-Routinen, für die entsprechende Änderungen zu erwarten sind, üblicherweise als festwertprogrammiert Software persistent abgespeichert. Persistent bedeutet, daß die Software einerseits, insb. auch nach einem durch einen Ausfall der Energieversorgung bedingten Neustart der Feldgeräte-Elektronik 1, gelesen und somit ausgeführt werden kann; andererseits kann die Software auch, insb. zum Rekonfigurieren der Feldgeräte-Elektronik 1, umprogrammiert werden.

Gemäß Fig. 1 umfaßt die Feldgeräte-Elektronik 1 daher des weiteren eine Steuer-Schaltung 14 mit wenigstens einem Mikroprozessor 141, der bevorzugt via Bus-System 12 Zugriff auf das digitale Aufnehmer-Signal x₃₂ sowie auf in einer nicht-flüchtigen Datenspeicher-Schaltung 15 der Feldgeräte-Elektronik 1 persistent gespeicherte Software hat. Ferner können auch extern ablaufende, via Bus-System 2 mit der Feldgeräte-Elektronik 1 kommunizierenden Prozesse auf die Datenspeicher-Schaltung 15 Daten schreibend und/oder Daten lesend und somit auch auf die gespeicherte Software zugreifen.

Die Datenspeicher-Schaltung 15 kann z.B. mittels eines einzigen EEPROM-Schaltkreises oder mittels mehrerer EEPROM-Schaltkreise realisiert sein. Selbstverständlich können auch andere dem Fachmann bekannte nicht-flüchtige Speicher-Schaltkreise wie z.B. FLASH/EEPROM-, EPROM- und/oder CMOS-Schaltkreise für die Datenspeicher-Schaltung 15 verwendet werden.

Zur Realsierung von schnellen, insb. in Echt-Zeit ablaufenden, Signalverabeitungs-Routinen umfaßt die Feldgeräte-Elektronik 1 bevorzugt eine als Arbeitsspeicher dienende flüchtige Datenspeicher-Schaltung 16 von geringer Zugriffszeit, in die häufig auszuführende Programm-Codes der Software z.B. aus der Datenspeicher-Schaltung 15 geladen werden können. Die Datenspeicher-Schaltung 16 kann z.B. über das interne Bus-System 12 an die Steuer-Schaltung 14 angekoppelt und/oder als Cachspeicher direkt in die Steuer-Schaltung 14 integriert sein. Als Datenspeicher-Schaltung 16 können z.B. statische und/oder dynamische RAM-Schaltkreise verwendet werden.

Ferner umfaßt die Feldgeräte-Elektronik 1 eine Energiespeicher-Elektronik 17. Diese dient bevorzugt dazu, eine für wenigstens einen Daten schreibenden Zugriff auf die Datenspeicher-Schaltung 15 erforderliche Energie, insb. auch während eines Ausfalls der via Bus-System 2 realisierten Energieversorgung, vorzuhalten.

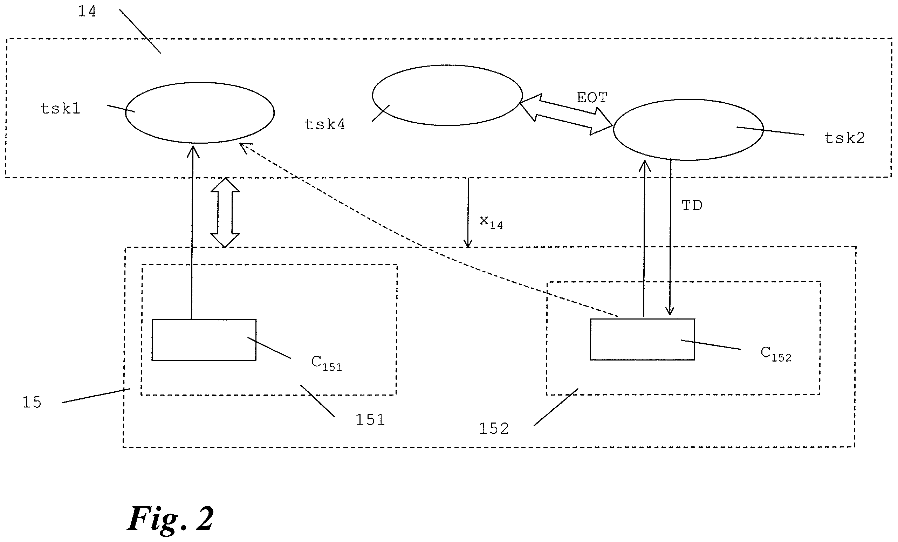

Die in der Datenspeicher-Schaltung 15 abgelegte Software umfaßt gemäß der Fig. 2 wenigstens einen ersten Programm-Code C₁₅₁, der eine erste Konfiguration der Feldgeräte-Elektronik 1 repräsentiert und einen aktivierten ersten Speicherbereich 151 der Datenspeicher-Schaltung 15 belegt. Aktivierter Speicherbereich bedeutet hierbei, daß von wenigstens einem im Mikroprozessor 141 ablaufenden Rechen-Prozeß tsk1 Daten lesend auf diesen Speicherbereich zugegriffen und der entsprechend gespeicherte Programm-Code, z.B. der Programm-Code C₁₅₁, ausgeführt werden kann; deaktivierter Speicherbereich bedeutet dementsprechend, daß kein im Mikroprozessor 141 ablaufendener Rechen-Prozeß Daten lesend oder Daten schreibend auf diesen Speicherbereich zugreifen kann.

Zur Rekonfiguration der Feldgeräte-Elektronik 1 wird der Programm-Code C₁₅₁ nach einem Merkmal der Erfindung durch einen dem Umprogrammieren der implementierten Software dienenden, eine zweite Konfiguration der Feldgeräte-Elektronik 1 repräsentierenden zweiten Programm-Code C₁₅₂ ersetzt, und zwar derart, daß letzterer, wie in Fig. 2 mit dem strich-punktiert gezeichneten Pfeil symbolisch dargestellt, anstelle des Programm-Codes C₁₅₁ seitens des Rechen-Prozesses tsk1 ausführbar ist bzw. ausgeführt wird.

Gemäß Fig. 1 umfaßt die Datenspeicher-Schaltung 15 zum Ändern der momentan ausgeführten Software ferner mindestens einen aktivierbaren zweiten Speicherbereich 152, in dem der Programm-Code C₁₅₂ gespeichert ist.

Als Programm-Code können vollständige Programme, z.B. das Meßsignal x₁₂ erzeugende Signalverarbeitungs-Routinen, einzelen Programm-Schritte, und/oder als Programm-Parameter codierte Kalibrier-Daten für das Feldgerät dienen. Des weiteren können auch zur Realisierung von Kommunikations-Schnittstellen und/oder zum Treiben pheripherer Anzeige-und Bedienelemente dienende Routinen als Programm-Code in der Datenspeicher-Schaltung 15 abgelegt sein. Programm-Codes der beschriebenen Art können sowohl seitens des Herstellers als auch seitens des Anwenders, insb. während oder nach der Inbetriebnahme des Feldgerätes, generiert und in die Datenspeicher-Schaltung 15 implementiert worden sein.

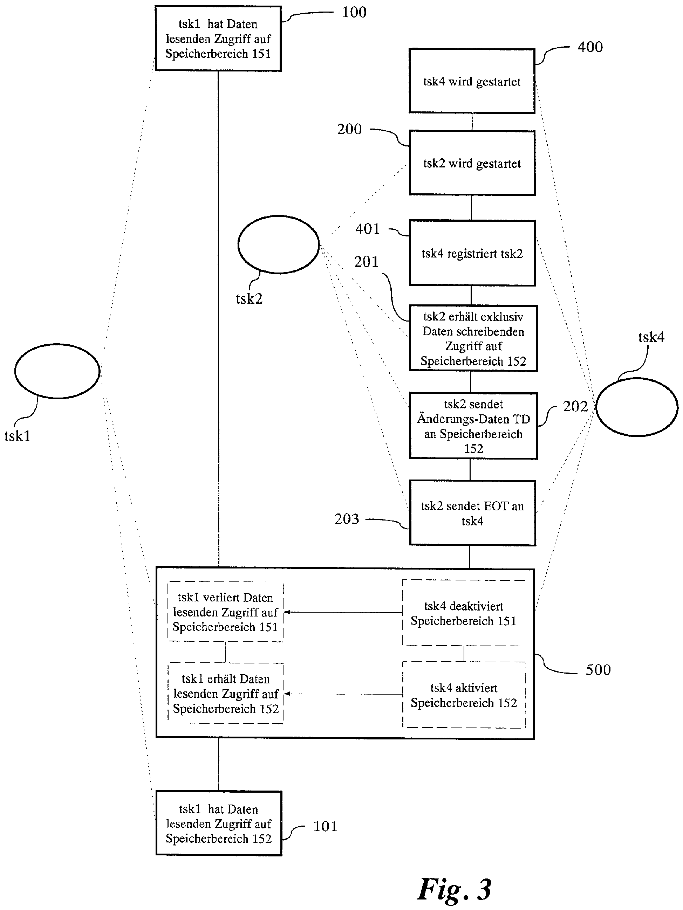

Gemäß Fig. 3 kann der Rechen-Prozeß tsk1 im Betrieb der Feldgeräte-Elektronik 1 während eines als Verfahrensschritt 101 dargestellten Zeitintervalls Daten lesenden auf den Speicherbereich 151 zugreifen. Innerhalb dieses Verfahrensschrittes 101 wird der Programm-Code C₁₅₁ somit zumindest temporär im Rechen-Prozeß tsk1 ausgeführt.

Zum Erstellen des Programm-Codes C₁₅₂ wird in einem weiteren Verfahrensschritt 200 gemäß Fig. 3 ein erster Konfigurations-Prozeß tsk2 gestartet, der entsprechende, z.B. manuell eingegebene, Änderungs-Daten TD an die Datenspeicher-Schaltung 15 sendet. Dazu kann der Konfigurations-Prozeß tsk2 bevorzugt sowohl Daten schreibend als auch Daten lesend auf die Datenspeicher-Schaltung 15 zugreifen.

Als Konfigurations-Prozeß tsk2 können z.B. ein in der Feldgeräte-Elektronik 1 oder in einem an die Kommunikations-Schnittstelle 11 das bereits erwähnte Modem angeschlossenen externen Programmiergerät ablaufendes, Editor-Programm oder auch eine, von einem Massenspeicher die Änderungs-Daten TD in die Datenspeicher-Schaltung 15 ladende Speicher-Routine dienen. Der Konfigurations-Prozeß tsk2 kann aber auch auf einem externen, die Änderungs-Daten TD via Bus-System 2 sendenden Programmier-Gerät ablaufen.

Ein Vorteil der Erfindung besteht darin, daß das Feldgerät während des Rekonfigurierens der Feldgeräte-Elektronik 1 im Meßbetrieb verbleiben kann, d.h. auch während des Rekonfigurierens ist stets eine ausführbare Software in der Datenspeicher-Schaltung 15 geladen. Zu diesem Zweck ist der Speicherbereich 151 auch nach dem Starten des Konfigurations-Prozesses tsk2, wie in Fig. 3 dargestellt, aktiviert, so daß zumindest der bereits erwähnte Rechen-Prozeß tsk1 nach wie vor den die momentan gültige erste Konfiguration repräsentierenden Programm-Code C₁₅₁ ausführen kann.

In einer derartigen, den Rechen-Prozeß tsk1 und den Konfigurations-Prozeß tsk2 umfassenden, Multi-User-Umgebung müssen Daten lesende und/oder Daten schreibende Zugriffe auf die Datenspeicher-Schaltung 15 derart koordiniert werden, daß stets eine ausführbare, insb. zu den vorgegebenen Meßaufgaben konforme, Software aktiviert ist; Änderungen, die zu Inkonsistenzen der ausgeführten Software bezüglich der Meßaufgaben führen können, sind dementsprechend zu verhindern. Dazu wird in der Steuer-Schaltung 14 gemäß Fig. 3 in einem Verfahrenschritt 400 vor dem Beginn des Rekonfigurierens ein Koordinations-Prozeß tsk4 gestartet, der das Daten lesende und/oder das Daten schreibende Zugreifen auf die Datenspeicher-Schaltung 15 seitens im Mikroprozessor 141 ablaufender Prozesse, insb. seitens des Konfigurations-Prozesses tsk2 und/oder seitens des Rechen-Prozesses tsk1, steuert.

Als Koordinations-Prozeß tsk4 kann z.B. ein Persistenz-Manager einer in der Feldgeräte-Elektronik 1 implementierten Datenbank dienen, der wiederum von einem übergeordneten Transaktions-Manager der Datenbank gesteuert werden kann. Diese Datenbank ist ebenfalls als eine Software in der Datenspeicher-Schaltung 15 persistent abgelegt. Der Persistenz-Manager und ggf. der Transaktions-Manager können zu deren Ausführung ebenfalls in die Datenspeicher-Schaltung 16 geladen werden.

Nach dem Starten des Konfigurations-Prozesses tsk2 wird letzterer in einem Verfahrenschritt 401 beim in der Steuer-Schaltung 14 ablaufenden Koordinations-Prozeß tsk4 angemeldet und in diesem registriert. Daraufhin reserviert der Koordinations-Prozeß tsk4 den momentan deaktivierten Speicherbereich 152 für den Konfigurations-Prozeß tsk2, und zwar derart, daß exklusiv der Konfigurations-Prozeß tsk2 in einem Verfahrensschritt 201 einen Daten schreibender Zugriff auf den Speicherbereich 152 erhält. Zum Konfigurations-Prozeß tsk2 ggf. parallel ablaufende Konfigurations-Prozessen können somit keine Daten in den Speicherbereich 152 einschreiben.

Danach erfolgt das bereits erwähnte Senden der Änderungs-Daten TD an die Datenspeicher-Schaltung 15 seitens des Konfigurations-Prozesses tsk2, dargestellt als Verfahrensschritt 202. Nachdem der Programm-Code C₁₅₂ vom Konfigurations-Prozeß tsk2 vollständig, insb. fehlerfrei, in den Speicherbereich 152 übertragen worden ist, wird vom Konfigurations-Prozeß tsk2 in einem Verfahrensschritt 203 ein enstprechender, das Ende der Übertragung anzeigender Befehl EOT an den Koordinations-Prozeß tsk4 gesendet.

Zum Rekonfigurieren der Feldgeräte-Elektronik 1 ist nunmehr lediglich der Speicherbereich 152 mit dem Programm-Code C₁₅₂ zu aktivieren. Aufgrund dessen, daß im Betrieb des Feldgerätes stets nur eine einzige Konfiguration der Feldgeräte-Elektronik 1 momentan gültig, gleichzeitig also höchstens einer der Speicherbereiche 151, 152 aktiviert sein darf, ist zuvor der bis dahin aktivierte Speicherbereich 151 zu deaktivieren.

Das Deaktivieren des Speicherbereichs 151 und das Aktivieren des Speicherbereichs 152 wird gemäß Fig. 3 in einem einzigen, ebenfalls vom Koordinations-Prozeß tsk4 gesteuerten Verfahrensschritt 500 durchgeführt. Dazu wird mittels der Steuer-Schaltung 14 ein entsprechendes dem Deaktivieren des Speicherbereiches 151 und dem Aktivieren des Speicherbereiches 152 dienendes digitales Auswahl-Signal x₁₄ erzeugt. Auswahl-Signal x₁₄ kann z.B. ein an die Datenspeicher-Schaltung 15 adressierter und gesendeter Schreib-Befehl sein, der dazu dient, eine persistent gespeicherte, auf den Speicherbereich 151 verweisende erste Sprung-Adresse durch eine auf den Speicherbereich 152 verweisende zweite Sprung-Adresse zu ersetzen; des weiteren kann der als Auswahl-Signal x₁₄ dienende Schreib-Befehl auch eine codierte, den Rechen-Prozeß steuernde Kennung der ersten Sprung-Adresse durch eine codierte Kennung der zweiten Sprung-Adresse ersetzen.

Da die Speicherbereiche 151, 152 praktisch als Wechselspeicher betrieben werden, befindet sich die Feldgeräte-Elektronik 1 lediglich für eine kurze Dauer, nämlich für die Zeit des Umschaltens vom aktivierten Speicherbereich 151 auf den aktivierten Speicherbereich 152, in einem kritischen Zustand, während der die erste Konfiguration außer Betrieb und die zweite Konfiguration noch nicht in Betrieb genommen ist. Das Umschalten der Speicherbereiche erfolgt 151, 152 praktisch mittels eines einzigen Daten schreibenden Zugriff auf die Datenspeicher-Schaltung 15 und kann, insb. auch mittels der in der Energiespeicher-Schaltung 17 vorgehaltenen Energiereserven, ohne weiteres gepuffert werden. Somit ist die momentan gültige Software und damit auch die Feldgeräte-Elektronik 1 während des Rekonfigurierens und/oder nach einem Ausfall der oben erwähnten, externen Energieversorgung stets in einem ausführbaren Zustand.

Nach dem Beenden des Verfahrensschrittes 500 kann der Rechen-Prozeß tsk1 nunmehr, wie in Fig. 3 schematisch als Verfahrenschritt 102 dargestellt, den im Speicherbereich 152 abgelegten Programm-Code C₁₅₂ ausführen. Selbstverständlich kann der aktivierte Programm-Code C₁₅₂ in der oben beschriebenen Weise wiederum durch einen anderen Programm-Code ersetzt werden.

Nach einer bevorzugten Weiterbildung des Verfahrens der Erfindung wird vor dem Starten des Konfigurations-Prozesses tsk2 der im Speicherbereich 151 befindlichen Programm-Code C₁₅₁ mittels seitens des Mikroprozessors 141 gesteuerter Lese/Schreib-Operationen in den Speicherbereich 152 übertragen und so eine Sicherheitskopie vom Programm-Code C₁₅₁ angelegt. Dadurch ist der Programm-Code C₁₅₁ auch für den Fall eines Software- und/oder eines Hardware-Fehlers im Speicherbereich 151 mit einer hohen Wahrscheinlichkeit verfügbar und kann z.B. wiederum mittels eines weiteren, den Speicherbereich 152 aktivierenden Auswahl-Signals in einfacher Weise re-aktiviert werden. Das Kopieren des Programm-Codes C₁₅₁ kann z.B. unmittelbar nach dem Laden des Programm-Codes C₁₅₁ oder nach dem Aktivieren des Speicherbereiches 151 erfolgen. In analoger Weise kann der Programm-Code C₁₅₂ nach dem Deaktivieren des Speicherbereiches 151 vom Speicherbereich 152 in den Speicherbereich 151 kopiert werden.

Die Datenspeicher-Schaltung 15 kann in vorteilhafter Weise als eine die Speicherbereiche 151, 152 umfaßende, monolitische Schaltung ausgeführt sein. Die Speicherbereiche 151 und/oder 152 können aber auch als fest oder als lösbar, insb. steckbar, an das Bus-System 12 gekoppelte Module ausgeführt sein . Für letzteren Fall kann als aktivierter Speicherbereich 152 auch eine externe Datenspeicher-Schaltung, z.B. eine Datenspeicher-Schaltung im bereits erwähnten, an die Feldgeräte-Elektronik 1 angeschlossenen Programmiergerät, dienen, auf die die Feldgeräte-Elektronik 1 zumindest temporär einen Daten lesenden Zugriff hat.

Nach einer anderen bevorzugten Weiterbildung des Feldgerätes der Erfindung umfaßt die Datenspeicher-Schaltung 15 ferner einen temporär aktivierbaren dritten Speicherbereich 153 zum Speichern einer eine dritte Konfiguration des Feldgerätes repräsentierenden dritten Programm-Codes C₁₅₃ der Software.

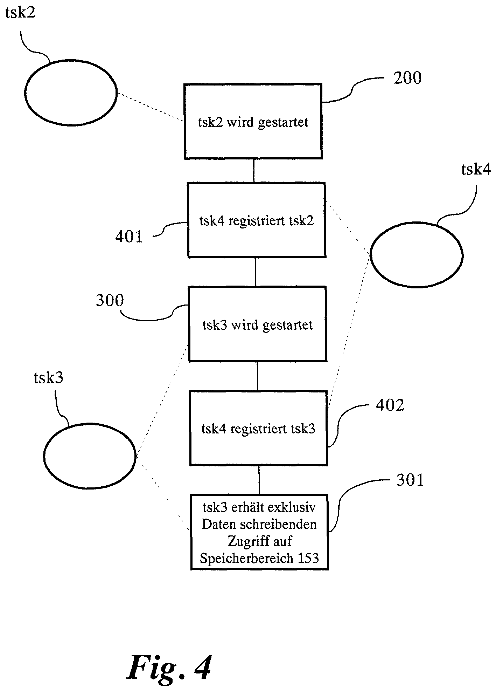

Nach einer anderen bevorzugten Weiterbildung des Verfahrens der Erfindung wird, wie in Fig. 4 als ein Verfahrensschritt 300 dargestellt, nach dem Registrieren des Konfigurations-Prozesses tsk2 im Koordinations-Prozeß tsk4 ein zweiter Konfigurations-Prozeß tsk3 gestartet, und zwar derart, daß beide Konfigurations-Prozesse tsk2, tsk3 parallel, also praktisch gleichzeitig ablaufen. Im Koordinations-Prozeß tsk4 wird daraufhin in einem Verfahrensschritt 402 der Konfigurations-Prozeß tsk3 ebenfalls registriert und während eines Verfahrensschritt 301 der momentan deaktivierte Speicherbereich 153 für den Konfigurations-Prozeß tsk3 reserviert. Das Reservieren des Speicherbereiches 153 erfolgt in Analogie zum Reservieren des Speicherbereiches 152 derart, daß exklusiv der Konfigurations-Prozeß tsk3 Daten schreibend auf den Speicherbereich 153 zugreifen kann. Mittels des Koordinations-Prozesses tsk4 wird der Speicherbereich 153 gleichzeitig so eingestellt, daß Rechen-Prozesse, wie z.B. der Rechen-Prozeß tsk1, weder Daten lesend noch schreibend darauf zugreifen können. Ferner kann der Konfigurations-Prozeß tsk2 ebenfalls keine Daten in den Speicherbereich 153 einschreiben.

Nach einer weiteren bevorzugten Weiterbildung des Verfahrens der Erfindung wird der Speicherbereich 152 vom Koordinations-Prozeß tsk4 nach dem Registrieren des Konfigurations-Prozesses tsk2 so eingestellt, daß der Konfigurations-Prozeß tsk3 auf den Speicherbereich 152 Daten lesend zugreifen kann. Somit können die durch den Konfigurations-Prozeß tsk2 vorgenommenen Änderungen der Software im Speicherbereich 152 vom Konfigurations-Prozeß tsk3 verfolgt und ggf. bei der Erstellung des Programm-Codes C₁₅₃ berücksichtigt werden.

## Patentansprüche

1. Verfahren zum Rekonfigurieren einer Feldgeräte-Elektronik (1) eines Feldgeräts zum Erzeugen wenigstens eines eine Prozeßmeßgröße (x₁₁), insb. einen Füllstand in einem Behälter, einen Volumen- und/oder Massedurchfluß eines strömenden Fluids oder einen Druck, einen pH-Wert und/oder eine Temperatur eines Mediums, repräsentierenden Meßsignals (x₁₂), wobei das Feldgerät die Feldgeräte-Elektronik (1) sowie einen an die Feldgeräte-Elektronik (1) angeschlossen, auf die Prozeßmeßgröße (x₁₁) reagierenden Meßwert-Aufnehmer (3) aufweist,
- wobei die Feldgeräte-Elektronik (1) umfaßt:
-- eine nicht-flüchtige Datenspeicher-Schaltung (15) zum persistenten Speichern von Software
--- mit einem aktivierten ersten Speicherbereich (151) für einen eine erste Konfiguration der Feldgeräte-Elektronik (1) repräsentierenden ersten Programm-Code (C₁₅₁) und
--- mit einem deaktivierten zweiten Speicherbereich (152) für einen eine zweite Konfiguration der Feldgeräte-Elektronik (1) repräsentierenden zweiten Programm-Code (C₁₅₂), sowie
- eine Steuer-Schaltung (14), die ein dem Deaktivieren des ersten Speicherbereichs (151) und dem Aktivieren des zweiten Speicherbereichs (152) dienendes Auswahl-Signal (x₁₄) erzeugt;
- und wobei der Meßwert-Aufnehmer (3) ein Coriolis-Massedurchfluß-Aufnehmer oder ein magnetisch-induktiver Volumendurchfluß-Aufnehmer oder ein Druck-Transmitter oder eine pH-Elektrodenanordnung oder ein Temperatur-Aufnehmer oder ein Füllstands-Aufnehmer ist, welches Verfahren folgende Schritte (100, 200, 401, 201, 203, 500) umfaßt:
- ein in einem aktivierten ersten Speicherbereich (151) der Datenspeicher-Schaltung (15) gespeicherter, eine erste Konfiguration der Feldgeräte-Elektronik (1) repräsentierender erster Programm-Code (C₁₅₁) wird von einem Rechen-Prozeß (tsk1) ausgeführt,
- ein erster Konfigurations-Prozeß (tsk2) wird gestartet und in einem Koordinations-Prozeß (tsk4) registriert,
- der Koordinations-Prozeß (tsk4) gewährt exklusiv dem ersten Konfigurations-Prozeß (tsk2) einen Daten schreibenden Zugriff auf einen zweiten Speicherbereich (152) der Datenspeicher-Schaltung (15),
- der erste Konfigurations-Prozeß (tsk2) sendet Änderungs-Daten (TD) an den zweiten Speicherbereich (152), die dem Erstellen eines eine zweite Konfiguration der Feldgeräte-Elektronik (1) repräsentierenden zweiten Programm-Codes (C₁₅₂) dienen, und
- der Koordinations-Prozeß (tsk4) deaktiviert den ersten Speicherbereich (151) und aktiviert den zweiten Speicherbereich (152).

2. Verfahren nach Anspruch 1,
- bei dem ein zweiter Konfigurations-Prozeß (tsk3) gestartet und im Koordinations-Prozeß (tsk4) registriert wird, und
- bei dem der Koordinations-Prozeß (tsk4) exklusiv dem zweiten Konfigurations-Prozeß (tsk3) einen Daten schreibenden Zugriff auf einen dritten Speicherbereich (153) der Datenspeicher-Schaltung (15) gewährt.

3. Verfahren nach Anspruch 1 oder 2, bei dem der Koordinations-Prozeß (tsk4) exklusiv dem ersten Konfigurations-Prozeß (tsk2) einen Daten lesenden Zugriff auf den zweiten Speicherbereich (152) gewährt.

4. Verfahren nach einem der vorherigen Ansprüche, bei dem vor dem Starten des ersten Konfigurations-Prozesses (tsk2) der erste Programm-Code (C₁₅₁) in den zweiten Speicherbereich (152) eingeschrieben wird.

5. Verfahren nach einem der vorherigen Ansprüche,
- wobei die Feldgeräte-Elektronik (1) mittels einer Kommunikations-Schnittstelle (11) mit einem externen Bus-System (2), insb. einem PROFIBUS-PA oder einem FIELDBUS oder einem CAN-BUS, gekoppelt ist;
- und wobei der erste Konfigurations-Prozeß (tsk2) auf einem externen, die Änderungs-Daten (TD) via Bus-System (2) sendenden Programmier-Gerät abläuft.

6. Feldgerät
- mit einer Feldgeräte-Elektronik (1) zum Erzeugen wenigstens eines eine Prozeßmeßgröße (x₁₁), insb. einen Füllstand in einem Behälter, einen Volumen- und/oder Massedurchfluß eines strömenden Fluids oder einen Druck, einen pH-Wert und/oder eine Temperatur eines Mediums, repräsentierenden Meßsignals (x₁₂)
- und mit einem an die Feldgeräte-Elektronik (1) angeschlossen, auf die Prozeßmeßgröße (x₁₁) reagierenden Meßwert-Aufnehmer (3),
- wobei die Feldgeräte-Elektronik (1) umfaßt:
-- eine nicht-flüchtige Datenspeicher-Schaltung (15) zum persistenten Speichern von Software
--- mit einem aktivierten ersten Speicherbereich (151) für einen eine erste Konfiguration der Feldgeräte-Elektronik (1) repräsentierenden ersten Programm-Code (C₁₅₁) und
--- mit einem deaktivierten zweiten Speicherbereich (152) für einen eine zweite Konfiguration der Feldgeräte-Elektronik (1) repräsentierenden zweiten Programm-Code (C₁₅₂), sowie
-- eine Steuer-Schaltung (14), die ein dem Deaktivieren des ersten Speicherbereichs (151) und dem Aktivieren des zweiten Speicherbereichs (152) dienendes Auswahl-Signal (x₁₄) erzeugt;
- und wobei der Meßwert-Aufnehmer (3) ein Coriolis-Massedurchfluß-Aufnehmer oder ein magnetisch-induktiver Volumendurchfluß-Aufnehmer oder ein Druck-Transmitter oder eine pH-Elektrodenanordnung oder ein Temperatur-Aufnehmer oder ein Füllstands-Aufnehmer ist,
- wobei das Feldgerät eingerichtet ist ein Verfahren mit folgende Schritte (100, 200, 401, 201, 203, 500) auszuführen:
- ein in einem aktivierten ersten Speicherbereich (151) der Datenspeicher-Schaltung (15) gespeicherter, eine erste Konfiguration der Feldgeräte-Elektronik (1) repräsentierender erster Programm-Code (C₁₅₁) wird von einem Rechen-Prozeß (tsk1) ausgeführt,
- ein erster Konfigurations-Prozeß (tsk2) wird gestartet und in einem Koordinations-Prozeß (tsk4) registriert,
- der Koordinations-Prozeß (tsk4) gewährt exklusiv dem ersten Konfigurations-Prozeß (tsk2) einen Daten schreibenden Zugriff auf einen zweiten Speicherbereich (152) der Datenspeicher-Schaltung (15),
- der erste Konfigurations-Prozeß (tsk2) sendet Änderungs-Daten (TD) an den zweiten Speicherbereich (152), die dem Erstellen eines eine zweite Konfiguration der Feldgeräte-Elektronik (1) repräsentierenden zweiten Programm-Codes (C₁₅₂) dienen, und
- der Koordinations-Prozeß (tsk4) deaktiviert den ersten Speicherbereich (151) und aktiviert den zweiten Speicherbereich (152).

7. Feldgerät nach dem vorherigen Anspruch, bei dem die Datenspeicher-Schaltung (15) einen deaktivierten dritten Speicherbereich (153) für einen eine dritte Konfiguration der Feldgeräte-Elektronik (1) repräsentierenden dritten Programm-Code (C₁₅₃) umfaßt.

8. Feldgerät nach Anspruch 6 oder 7, wobei die Feldgeräte-Elektronik (1) eine Energiespeicher-Elektronik (17) umfaßt, die dazu dient, eine für wenigstens einen Daten schreibenden Zugriff auf die Datenspeicher-Schaltung (15) erforderliche Energie vorzuhalten.

## Claims

1. Procedure designed for the reconfiguration of a field device electronics module (1) of a field device for the generation of at least a measuring signal (x₁₂) representing at one process measured variable (x₁₁), particularly a level in a vessel, a volume flow and/or mass flow of a flowing fluid or a pressure, a pH value and/or a temperature of a medium, wherein the field device features the field device electronics module (1) and a measured value sensor (3) connected to the field device electronics module (1) and reacting to the process measured variable (x₁₁),
- wherein the field device electronics module (1) comprises:
-- a non-volatile data memory circuit (15) for the persistent storage of software
--- with an activated first memory area (151) for a first program code (C₁₅₁) representing a first configuration of the field device electronics module (1) and
--- with a deactivated second memory area (152) for a second program code (C₁₅₂) representing a second configuration of the field device electronics module (1) and
-- a control circuit (14) that generates a selection signal (X₁₄) that serves to deactivate the first memory area (151) and activate the second memory area (152);
- and wherein the measured value sensor (3) is a Coriolis mass flow sensor or an electromagnetic volume flow sensor or a pressure transmitter or a pH electrode arrangement or a temperature sensor or a level sensor, wherein said procedure comprises the following steps (100, 200, 401,201, 203, 500):
- a first program code (C₁₅₁) stored in an activated first memory area (151) of the data memory circuit (15) and representing a first configuration of the field device electronics module (1) is executed by a computing process (tsk1),
- a first configuration process (tsk2) is started and registered in a coordination process (tsk4),
- the coordination process (tsk4) exclusively grants the first configuration process (tsk2) data write-access to a second memory area (152) of the data memory circuit (15),
- the first configuration process (tsk2) transmits modification data (TD) to the second memory area (152), said data being used to create a second program code (C₁₅₂) that represents a second configuration of the field device electronics module (1), and
- the coordination process (tsk4) deactivates the first memory area (151) and activates the second memory area (152).

2. Procedure as claimed in Claim 1,
- wherein a second configuration process (tsk3) is started and registered in the coordination process (tsk4), and
- wherein the coordination process (tsk4) exclusively grants the second configuration process (tsk3) data write-access to a third memory area (153) of the data memory circuit (15),

3. Procedure as claimed in Claim 1 or 2, wherein the coordination process (tsk4) exclusively grants the first configuration process (tsk2) data read-access to a second memory area (152).

4. Procedure as claimed in one of the previous claims wherein the first program code (C₁₅₁) is written to the second memory area (152) before the first configuration process (tsk2) is started.

5. Procedure as claimed in one of the previous claims,
- wherein the field device electronics module (1) is coupled with an external bus system (2), particularly a PROFIBUS-PA or a FIELDBUS or a CAN-BUS, by means of a communication interface (11);
- and wherein the first configuration process (tsk2) runs on an external programming device that transmits modification data (TD) via the bus system (2).

6. Field device
- with a field device electronics module (1) for the generation of at least one measuring signal (X₁₂) that represents a process measured variable (x₁₁), particularly a level in a vessel, a volume flow and/or mass flow of a flowing fluid or a pressure, a pH value and/or a temperature of a medium
- and with a measured value sensor (3) connected to the field device electronics module (1) and reacting to the process measured variable (x₁₁),
- wherein the field device electronics module (1) comprises:
-- a non-volatile data memory circuit (15) for the persistent storage of software
--- with an activated first memory area (151) for a first program code (C₁₅₁) representing a first configuration of the field device electronics module (1) and
--- with a deactivated second memory area (152) for a second program code (C₁₅₂) representing a second configuration of the field device electronics module (1) and
-- a control circuit (14) that generates a selection signal (X₁₄) that serves to deactivate the first memory area (151) and activate the second memory area (152);
- and wherein the measured value sensor (3) is a Coriolis mass flow sensor or an electromagnetic volume flow sensor or a pressure transmitter or a pH electrode arrangement or a temperature sensor or a level sensor,
- wherein the field device is set up to carry out a procedure comprising the following steps (100, 200, 401, 201, 203, 500):
- a first program code (C₁₅₁) stored in an activated first memory area (151) of the data memory circuit (15) and representing a first configuration of the field device electronics module (1) is executed by a computing process (tsk1),
- a first configuration process (tsk2) is started and registered in a coordination process (tsk4),
- the coordination process (tsk4) exclusively grants the first configuration process (tsk2) data write-access to a second memory area (152) of the data memory circuit (15),
- the first configuration process (tsk2) transmits modification data (TD) to the second memory area (152), said data being used to create a second program code (C₁₅₂) that represents a second configuration of the field device electronics module (1), and
- the coordination process (tsk4) deactivates the first memory area (151) and activates the second memory area (152).

7. Field device as claimed in the previous claim, wherein the data memory circuit (15) comprises a deactivated third memory area (153) for a third program code (C₁₅₃) representing a third configuration of the field device electronics (1).

8. Field device as claimed in Claim 6 or 7, wherein the field device electronics module (1) comprises an energy storage electronics module (17) that is used to maintain the energy that is needed for at least a write-access to the data memory circuit (15).

## Revendications

1. Procédé destiné à la reconfiguration d'une électronique d'appareil de terrain (1) d'un appareil de terrain destiné à la génération d'au moins un signal de mesure (x₁₂) représentant une grandeur de mesure (x₁₁) d'un process, notamment un niveau dans un réservoir, un débit volumique et/ou massique d'un fluide en écoulement ou une pression, un pH et/ou une température d'un produit, procédé pour lequel l'appareil de terrain comprend l'électronique d'appareil de terrain (1) ainsi qu'un transmetteur de mesure (3) raccordé à l'électronique d'appareil de terrain (1), réagissant à la grandeur de mesure (x₁₁) d'un process,
- pour lequel l'électronique d'appareil de terrain (1) comprend :
-- un circuit de mémoire de données non volatile (15) destiné à la mémorisation persistante du logiciel
--- avec une première zone de mémoire (151) activée pour un premier code de programme (C₁₅₁) représentant une première configuration de l'électronique d'appareil de terrain (1) et
--- avec une deuxième zone de mémoire (152) activée pour un deuxième code de programme (C₁₅₂) représentant une deuxième configuration de l'électronique d'appareil de terrain (1), ainsi que
-- un circuit de commande (14), qui génère un signal de sélection (X₁₄) servant à la désactivation de la première zone de mémoire (151) et à l'activation de la deuxième zone de mémoire (152) ;
- et procédé pour lequel le transmetteur de mesure (3) est un débitmètre massique Coriolis ou un débitmètre volumique magnéto-inductif ou un transmetteur de pression ou une configuration d'électrodes de pH ou un transmetteur de température ou un transmetteur de niveau, lequel procédé comprend les étapes suivantes (100, 200, 401,201, 203, 500) :
- un premier code de programme (C₁₅₁), mémorisé dans une première zone de mémoire (151) activée, représentant une première configuration de l'électronique d'appareil de terrain (1), est exécuté par un process de calcul (tsk1),
- un premier process de configuration (tsk2) est démarré et enregistré dans un process de coordination (tsk4),
- le process de coordination (tsk4) accorde exclusivement au premier process de configuration (tsk2) un accès en écriture à une deuxième zone de mémoire (152) du circuit de mémoire de données (15),
- le premier process de configuration (tsk2) émet des données de modification (TD) à la deuxième zone de mémoire (152), qui servent à la création d'un deuxième code de programme (C₁₅₂) représentant une deuxième configuration de l'électronique d'appareil de terrain (1), et
- le process de coordination (tsk4) désactive la première zone de mémoire (151) et active la deuxième zone de mémoire (152).

2. Procédé selon la revendication 1,
- pour lequel un deuxième process de configuration (tsk3) est démarré et est enregistré dans le process de coordination (tsk4), et
- pour lequel le process de coordination (tsk4) accorde exclusivement au deuxième process de configuration (tsk3) un accès en écriture à une troisième zone de mémoire (153) du circuit de mémoire de données (15),

3. Procédé selon la revendication 1 ou 2, pour lequel lors du process de coordination (tsk4), un accès en lecture est accordé exclusivement au premier process de configuration (tsk2) sur la deuxième zone de mémoire (152).

4. Procédé selon l'une des revendications précédentes, pour lequel le premier code de programme (C₁₅₁) est écrit dans la deuxième zone de mémoire (152) avant le démarrage du premier process de configuration (tsk2).

5. Procédé selon l'une des revendications précédentes,
- pour lequel l'électronique d'appareil de terrain (1) est couplée au moyen d'une interface de communication (11) avec un système de bus externe (2), notamment un PROFIBUS-PA ou un FIELDBUS ou un CAN-BUS ;
- et pour lequel le premier process de configuration (tsk2) se déroule sur un appareil de programmation externe émettant les données de modification (TD) via le système de bus (2).

6. Appareil de terrain
- avec une électronique d'appareil de terrain (1) destinée à la génération d'au moins un signal de mesure (X₁₂) représentant une grandeur de mesure (x₁₁) d'un process, notamment un niveau dans un réservoir, un débit volumique et/ou massique d'un fluide en écoulement ou une pression, un pH et/ou une température d'un produit
- et avec un transmetteur de mesure (3) raccordé à l'électronique d'appareil de terrain (1), réagissant à la grandeur de mesure (x₁₁) d'un process,
- pour lequel l'électronique d'appareil de terrain (1) comprend :
-- un circuit de mémoire de données (15) non volatile, destiné à la mémorisation persistante du logiciel
--- avec une première zone de mémoire (151) activée pour un premier code de programme (C₁₅₁) représentant une première configuration de l'électronique d'appareil de terrain (1) et
--- avec une deuxième zone de mémoire (152) activée pour un deuxième code de programme (C₁₅₂) représentant une deuxième configuration de l'électronique d'appareil de terrain (1), ainsi que
-- un circuit de commande (14), qui génère un signal de sélection (X₁₄) servant à la désactivation de la première zone de mémoire (151) et à l'activation de la deuxième zone de mémoire (152) ;
- et procédé pour lequel le transmetteur de mesure (3) est un débitmètre massique Coriolis ou un débitmètre volumique magnéto-inductif ou un transmetteur de pression ou une configuration d'électrodes de pH ou un transmetteur de température ou un transmetteur de niveau,
- pour lequel l'appareil de terrain est configuré de manière à exécuter un procédé avec les étapes suivantes (100, 200, 401, 201, 203, 500) :
- un premier code de programme (C₁₅₁), mémorisé dans une première zone de mémoire (151) activée, représentant une première configuration de l'électronique d'appareil de terrain (1) est exécuté par un process de calcul (tsk1),
- un premier process de configuration (tsk2) est démarré et enregistré dans un process de coordination (tsk4),
- le process de coordination (tsk4) accorde exclusivement au premier process de configuration (tsk2) un accès en écriture à une deuxième zone de mémoire (152) du circuit de mémoire de données (15),
- le premier process de configuration (tsk2) émet des données de modification (TD) à la deuxième zone de mémoire (152), qui servent à la création d'un deuxième code de programme (C₁₅₂) représentant une deuxième configuration de l'électronique d'appareil de terrain (1), et
- le process de coordination (tsk4) désactive la première zone de mémoire (151) et active la deuxième zone de mémoire (152).

7. Appareil de terrain selon la revendication précédente, pour lequel le circuit de mémoire de données (15) comprend une troisième zone de mémoire (153) désactivée pour un troisième code de programme (C₁₅₃) représentant une troisième configuration de l'électronique d'appareil de terrain (1).

8. Appareil de terrain selon la revendication 6 ou 7, pour lequel l'électronique d'appareil de terrain (1) comprend une électronique d'accumulateur d'énergie (17), qui sert à fournir l'énergie nécessaire pour au moins un accès en écriture au circuit de mémoire de données (15).
